# EUROPEAN PATENT SPECIFICATION

(11) **EP 1 950 976 B1**
(45) Date of publication and mention of the grant of the patent: **19.04.2017**
(21) Application number: 08155919.7
(22) Date of filing: 15.07.2004
(51) Int. Cl.: H04N 21/488, H04N 21/235, H04N 21/435, H04N 5/445, H04N 21/236, H04N 21/43, H04N 21/433, H04N 21/434, H04N 21/44, H04N 21/81, G06T 11/60

(54) **Information storage medium storing graphic data and apparatus and method of processing the graphic data**
Informationsspeichermedium mit darauf gespeicherten grafischen Daten sowie Vorrichtung und Verfahren zur Verarbeitung der grafischen Daten
Support de stockage d'informations stockant des données graphiques et appareil et procédé pour le traitement de données graphiques

(30) Priority: 31.07.2003 KR 20030053073; 15.10.2003 US 511110 P
(43) Date of publication of application: 30.07.2008
(62) Divisional of application: 04774131.9
(73) Proprietor: Samsung Electronics Co., Ltd., Suwon-si, Gyeonggi-do, 443-742 (KR)
(72) Inventor: Jung, Kil-Soo, Taen-eup, Hwasepmg-gun 445-986 Gyeonggi-do (KR); Moon, Seong-Jin 436-502 Cheongmyung Maeul, Yeongtong-gu, Suwonsi 443-738 Gyeonggi-do (KR)
(74) Representative: Appleyard Lees IP LLP

(56) References cited:
- Puri A; Schmidt R L; Haskell B G: "Overview of the MPEG Standards" In: Puri A; Chen T: "Multimedia Systems, Standards, and Networks", 22 March 2000 (2000-03-22), CRC Press, XP055027909, ISBN: 978-0-20-390844-0 * section IV.B: "MPEG-4 Systems" *
- "Digital Video Broadcasting (DVB); Subtitling systems; ETSI EN 300 743", IEEE, LIS, SOPHIA ANTIPOLIS CEDEX, FRANCE, vol. BC, no. V1.2.1, 1 October 2002 (2002-10-01), pages 1-48, XP014001877, ISSN: 0000-0001
- KEVIN BARRON ET AL: "Normative Composition: Problem definition and initial thoughts", 42. MPEG MEETING; 02-02-1998 - 06-02-1998; SAN JOSE; (MOTION PICTUR EEXPERT GROUP OR ISO/IEC JTC1/SC29/WG11), no. M3193, 26 January 1998 (1998-01-26), XP030032466, ISSN: 0000-0315
- "Draft Text of ISO/IEC FDIS 14496-1", 45. MPEG MEETING;12-10-1998 - 16-10-1998; ATLANTIC CITY; (MOTIONPICTURE EXPERT GROUP OR ISO/IEC JTC1/SC29/WG11),, no. N2501, 12 March 1999 (1999-03-12), XP030010872, ISSN: 0000-0387

## Description

The present invention relates to graphic data processing, and more particularly, to an information storage medium including graphic data having presentation in- formation, and an apparatus and method of processing the graphic data.

Various data compression formats are used to transmit video and audio data through broadcasting or store the video and audio data in a storage medium. Among the data compression formats, motion picture experts group (MPEG)-2 transport stream (TS) multiplexes and stores video and audio data by dividing the video and audio data into packets having a predetermined size. Since graphic data, as well as video data, is displayed on a screen, the MPEG-2 TS stored in an information storage medium includes the graphic data. The graphic data roughly comprises subtitle graphic data and navigation graphic data.

The graphic data included in the MPEG-2 TS is decoded in a graphic data processing apparatus and output to a display screen. Together with the graphic data, time information indicating when the graphic data is transmitted to a variety of buffers disposed inside the graphic data processing apparatus and time information indicating when the graphic data of a completely composed screen is output and stored in the information storage medium. Times indicated by the time information should be properly set so that graphic data processing may be performed efficiently. Further, a configuration of the buffers in the graphic data processing apparatus determines an efficiency of the graphic data processing apparatus. A conventional graphic data processing apparatus has a disadvantage in that the graphic data processing apparatus cannot reuse a graphic object of which a graphic screen is composed, thereby deteriorating the efficiency in the graphic data processing.

'Digital Video Broadcasting (DVB); Subtitling systems; ETSI EN 300 743' IEE, LIS, Sophia Antipolis Cedex, France, vol. BC, no. V1.2.1, 01 October 2002 pages 1 - 48 describes a method by which subtitles, logos and other graphical elements may be coded and carried in DVB bitstreams.

The present invention provides an information storage medium including graphic data that newly defines presentation information included therein to improve an efficiency in graphic data processing and an apparatus and method of processing the graphic data.

As described above, if graphic data composition information and presentation information are used, a graphic object is reusable during graphic data processing. Accordingly, a time taken to process graphic data is reducible and memory area may be saved.

According to the present invention there is provided an apparatus as set forth in claim 1. Other features of the invention will be apparent from the description which follows.
FIG. 1 is a diagram illustrating a structure of MPEG-2 TS for graphic data according to a first embodiment of the present invention;
FIG. 2 is a block diagram of an apparatus for processing graphic data according to a second embodiment of the present invention;
FIG. 3 is a diagram illustrating a third embodiment of the present invention of the graphic data;
FIG. 4A is a diagram illustrating a state in which a first display set having a page composition segment (PCS) with a page id=1 is stored in buffers;
FIG. 4B is a diagram illustrating a state in which a second display set having the PCS with the page id=2 is stored in the buffers;
FIG. 4C is a diagram illustrating a state in which a third display set having the PCS with the page id=3 is stored in the buffers;
FIG. 4D is a diagram illustrating a state in which a fourth display set having the PCS with the page id=4 is stored in the buffers;
FIGS. 5A-D are diagrams illustrating a process of inputting and outputting data to and from the buffers in accordance with a passage of time;
FIG. 6 is a detailed block diagram of a second buffer;
FIG. 7 is a flow chart illustrating a process of outputting graphic display data of a completely composed screen to a display device;
FIG. 8A is a flow chart illustrating a process of outputting a decoded graphic object; and
FIG. 8B is a flow chart illustrating a process of inputting the graphic object to a decoder.

Reference will now be made in detail to the embodiments of the present invention, examples of which are illustrated in the accompanying drawings, wherein like reference numerals refer to the like elements throughout. The embodiments are described below to explain the present invention by referring to the figures.

Graphic data, which is displayed together with video data, is classified into subtitle graphic data and navigation graphic data. The subtitle graphic data is screen description data, such as superimposed dialog, and the navigation graphic data is graphic data regarding menus, such as buttons used in navigating the video data.

A subtitle graphic data stream and a navigation graphic data stream are processed by different graphic data processing apparatuses in a video reproduction system. However, the graphic data processing apparatuses have a common configuration. The graphic data processing apparatuses process the subtitle graphic data stream and the navigation graphic data stream which are coded in a form of a motion picture experts group (MPEG) -2 transport stream (TS).

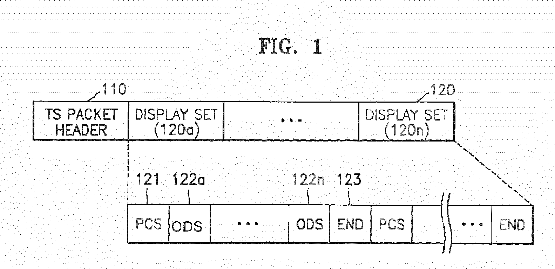

FIG. 1 is a diagram illustrating a structure of MPEG-2 TS for graphic data according to a first embodiment of the present invention.

Referring to FIG. 1, the graphic MPEG-2 TS includes a TS Packet header 110 and a data packet 120. The data packet 120 represents subtitle graphic data and navigation graphic data, and includes display sets 120a through 120n, which are graphic data groups displayed on one graphic screen.

The display set 120a, 120b... or 120n is a group of graphic data output to one display screen. Referring to FIG. 1, the display set 120a, 120b... or 120n includes at least two segments. That is, one display set must include a page composition segment (PCS) 121 and an end segment END 123. An object display segment (ODS) is optionally included in the display set 120a, 120b... or 120n, and a plurality of ODSs 122a through 122n may be included in the display set 120a, 120b... or 120n, if necessary. Each of the different segments will be explained in detail hereinbelow.

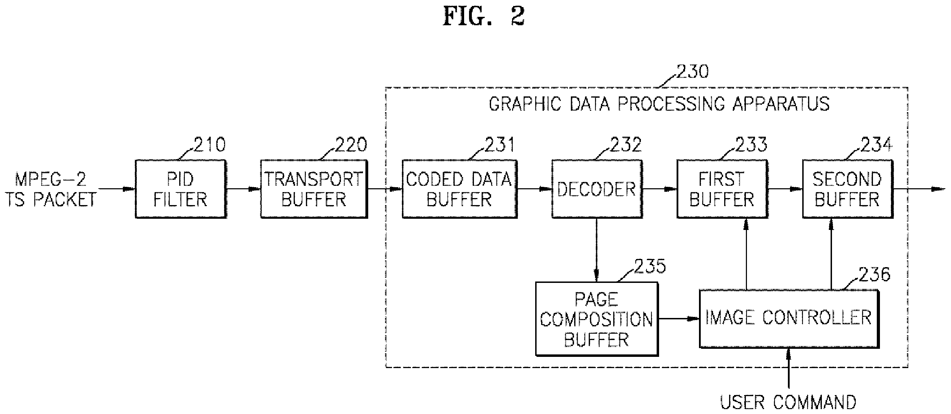

The PCS 121 includes composition information of the ODSs 122a through 122n displayed on one screen. That is, the PCS 121 includes position information indicating where objects are displayed on the screen and time information indicating when the objects are output to a display device. The time information is called presentation time stamp (PTS) information. Accordingly, the PCS 121 includes the PTS information. In an apparatus for processing graphic data which will be described with reference to FIG. 2, the PTS information indicates when graphic screen data, which is composed of the ODSs 122a through 122n necessary to compose one graphic screen, is output from a second buffer 234 to the display device.

The ODSs 122a through 122n include subtitle graphic object data and navigation graphic object data, and may contain size information, such as a width and a height, or color table information of a pertinent object. The size information and color table information will not be described in detail, but may be included in a separate segment of the display set 120a, 120b... or 120n. The ODSs 122a through 122n also include the PTS information thereof. The PTS information of the ODS 122 through 122n indicates when the ODSs 122a through 122n are stored in a first buffer 233 of the graphic data processing apparatus 230. The END 123 indicates the end of one display set 120a, 120b... or 120n.

Two types of presentation information exist. That is, when graphic data and page composition information which defines a page composition of the graphic data, one type of presentation information indicates when graphic screen data exist, which is composed with reference to the page composition information of the graphic data, is output to the display screen. The presentation information is recorded in the page composition segment (PCS) 121 including the page composition information.

When a graphic object of which the graphic data screen is composed, another type of the presentation information indicates when the graphic object is decoded in a decoder and is outputted. If a time taken to decode the graphic object in the decoder is 0, the presentation information may be considered as being information indicating when the graphic object is input to the decoder to be decoded.

FIG. 2 is a block diagram of a graphic data processing apparatus 230 for processing graphic data according to a second embodiment of the present invention.

The graphic data processing apparatus 230 includes a coded data buffer 231, a decoder 232, a first buffer 233, a second buffer 234, a page composition buffer 235 and an image controller 236.

The subtitle graphic stream and the navigation graphic stream, which are stored in a form of an MPEG-2 TS in the information storage medium, pass through a read buffer (not shown) and a source de-packetizer (not shown) in which an arrival time stamp (ATS) that had been added to the MPEG-2 TS is removed, and further, are input to a transport packet identifier (PID) filter 210 in the form of an MPEG-2 TS packet. Input timing of a first byte of the MPEG-2 TS packet input to the PID filter 210 is determined by ATS information contained in a first header of the MPEG-2 TS packet. Further MPEG-2 TS packets are input to the PID filter 210 according to aTSU_recording_rate.

The PID filter 210 determines, with reference to a PID of the MPEG-2 TS packet, whether or not the input MPEG-2 TS packet has a desired PID value, and transmits MPEG-2 TS packets having the desired PID values to a transport buffer 220. Since buffering and delay do not theoretically occur in the PID filter 210, the MPEG-2 TS packets are output immediately after being input to the PID filter 210.

The transport buffer 220 receives an MPEG-2 TS packet having a specific PID value output from the PID filter 210. That is, the transport buffer 220 performs a queue operation to temporarily store the MPEG-2 TS packet before the MPEG-2 TS packet is input to the graphic data processing apparatus 230. Once the MPEG-2 TS packet is input to the transport buffer 220, a header of the MPEG-2 TS packet and a header of a PES packet are removed. Further, referring to FIG. 1, the header 110 of the MPEG-2 TS packet for the subtitle graphic data and navigation graphic data includes PTS information. After the header of the MPEG-2 TS packet is removed, the PTS information indicates when the data packet 120, including of the display sets 120a, 120b ... and 120n shown in FIG. 1, is input to the coded data buffer 231.

The coded data buffer 231 receives the subtitle graphic data stream and the navigation graphic data stream in a coded state and buffers the subtitle graphic data stream and the navigation graphic data stream that are to be processed in the graphic data processing apparatus 230. The subtitle graphic data stream and the navigation graphic data stream input to the coded data buffer 231 are output from the coded data buffer 231 according to the PTS information included in the ODS 122a through 122n.

The PTS information of the ODS 122a through 122n is, for example, information indicating when a storage of the ODS 122a through 122n in the first buffer 233 ends, since an ideal decoding time of the graphic data in the decoder 232 is 0. That is, a time when the ODS 122a through 122n is output from the coded data buffer 231 is equal to a time when the ODS 122a through 122n is stored in the first buffer 233. The PTS information of the ODS 122a through 122n indicates not only the time when the ODS is output from the coded data buffer 231 but also the time when the ODS 122a through 122n is stored in the first buffer 233 after being decoded. However, since time is actually taken for the decoder 232 to decode the ODS 122a through 122n PTS values of two ODSs, for example, 122a and 122b have a predetermined time interval therebetween in consideration of a time taken to decode a previous object.

The decoder 232 decodes the input subtitle graphic data and input navigation graphic data. After the input subtitle and input navigation graphic data are decoded, the decoded PCS 121 is output to the page composition buffer 235 and the decoded ODS 122a through 122n is output to the first buffer 233. Theoretically, a time taken to decode the input data in the decoder 232 is 0. Thus, the decoding operation is called an instant decoding operation.

The page composition buffer 235 stores the PCS 121 which is decoded and output from the decoder 232.

The first buffer 233 stores the ODS 122a through 122n, which is decoded in the decoder 232, according to object identifier object_id of the ODS 122a through 122n. Since the decoded object data is stored in the first buffer 233, one object is reusable several times before the first buffer 233 is completely reset.

The second buffer 234 stores data right before graphic screen data of a screen, which is composed of graphic data objects necessary to display the subtitle graphic data and the navigation graphic data on the display device, is output. The data stored in the second buffer 234 is output to the display device according to the PTS information of the PCS 121 having page composition information of a pertinent page.

The image controller 236 controls, with reference to object identifiers (i. e., object_id), objects to be transmitted from the first buffer 233 to the second buffer 234 and to be displayed on one page. That is, the image controller 236 controls the first buffer 233 to select the graphic data object necessary to compose the pertinent page (i.e. screen), based on the page composition information of the PCS data output from the page composition buffer 235, and to transmit selected graphic data object from the first buffer 233 to the second buffer 234. The image controller 236 transmits the page composition information to the second buffer 234 to compose the display screen. Further, when the image controller 236 receives a user operation from a user, the image controller 236 controls the above elements to select the subtitle graphic data and the navigation graphic data having a different PID and composes a display screen.

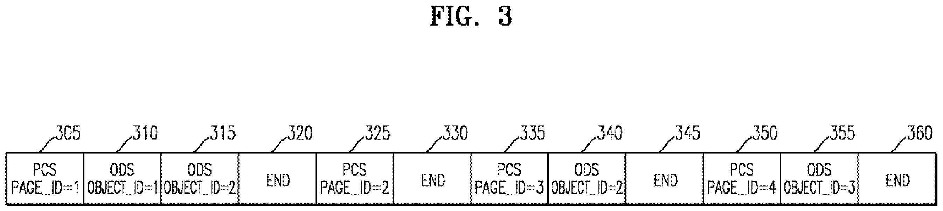

FIG. 3 is a diagram illustrating a third embodiment of the present invention of graphic data.

An operation of processing the graphic data having display sets 120a through 120n in a graphic data processing apparatus 230 and displaying the processed graphic data on a display screen will be explained in detail with reference to FIG. 3.

Referring to FIG. 3, subtitle graphic data and navigation graphic data have four display sets 305 through 320, 325 through 330, 335 through 345, and 350 through 360. As an MPEG-2 TS including a plurality of display sets, passes through the decoder 232, the subtitle graphic data and the navigation graphic data included in the ODS 122a through 122n is stored in the first buffer 233 and the page composition information contained in the PCS 121 is stored in the page composition buffer 235. Further, both the graphic data and the page composition information are, respectively, transmitted to the second buffer 234 based on respective PTS information. The operation will be explained below. A header of each display set is not shown in FIG. 3 for convenience of description.

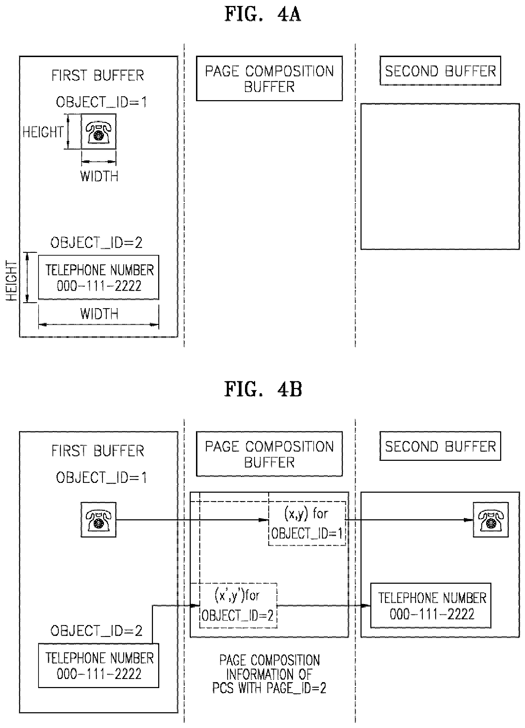

FIG. 4A is a diagram illustrating a state in which a first display set 305 through 320 having a PCS 305 with a page id=1 is stored in buffers.

Graphic data of an ODS 310 with an object id=I and graphic data of an ODS 315 with the object id=2 are stored in the first buffer 233 at a time indicated by the PTS information included in the ODSs 310 and 315. At this time, no data is stored in the page composition buffer 235. In general, an instance where all object data stored in the first buffer 233 is no longer used and a new display set is input to the first buffer 233 to process new object data is called mode conversion. A first PCS input during mode conversion has no data or is a dummy PCS. Accordingly, a graphic data processing apparatus 230 decodes only necessary objects of the first display set 305 through 320 until a subsequent mode conversion and stores the necessary objects in the first buffer 233. Therefore, there is no data in the second buffer 234.

FIG. 4B is a diagram illustrating a state in which a second display set 325 through 330 having a PCS 325 with the page id=2 is stored in the buffers.

Referring to FIG. 3, the second display set 325 through 330 having the PCS 325 with the page id=2 includes the PCS 325 and an END 330. The second display set 325 through 330 includes the page composition information to display the objects of the first display set 305 through 320 with the page id=1 stored in the first buffer 233 on the display screen. Accordingly, the PCS 325 with the page id=2 includes position information indicating which graphic objects are displayed and where the graphic objects are displayed on the display screen. The image controller 236 controls the first buffer 233 using the page composition information of the PCS 325 with the page id=2 so that the graphic objects corresponding to the ODS 310 with the object id=1 and the ODS 315 with the object id=2 is transmittable to the second buffer 234 and the screen may be composed. At a time indicated by the PTS information included in the PCS 325, graphic screen data of a completely composed screen is output from the second buffer 234 to the display device.

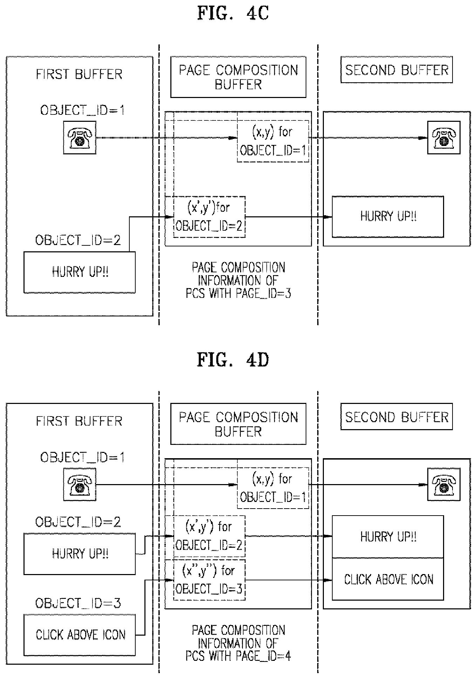

FIG. 4C is a diagram illustrating a state in which a third display set 335 through 345 having a PCS 335 with the page id=3 is stored in the buffers.

Referring to FIG. 3, the third display set 335 through 345 having the PCS 335 with the page id=3 includes the PCS 335, an ODS 340 with the object id=2, and an END 345. The ODS 340 included in the third display set 335 through 345 having the PCS 335 with the page id=3 has a common object id as that of the ODS 315 of the ODSs 310 and 315 of the first display set 305 through 320 having the PCS 305 with the page id=1. Since the ODS 340 having the common object id as that of the ODS 315 overlies the ODS 315, the ODS 340 consequently performs an update operation. That is, although the page composition information of the PCS does not change, an updated object is reflected on the display screen such that at a time indicated by PTS information of the pertinent PCS, graphic data, which is stored in the second buffer 234, of a completely composed screen is output to the display device.

FIG. 4D is a diagram illustrating a state in which a fourth display set 350 through 360 having a PCS 350 with the page id=4 is stored in the buffers.

Referring to FIG. 3, the fourth display set 350 through 360 having the PCS 350 with the page id=4 includes the PCS 350 containing new page composition information, an ODS 355 with the object id=3, and an END 360. After the graphic processing apparatus 230 stores data corresponding to each segment in the first buffer 233, the second buffer 234, and the page composition buffer 235, the graphic processing apparatus 230 outputs data, which is stored in the second buffer 235, of a completely composed screen to the display device at a time indicated by PTS information of the PCS 350 with the page id=4.

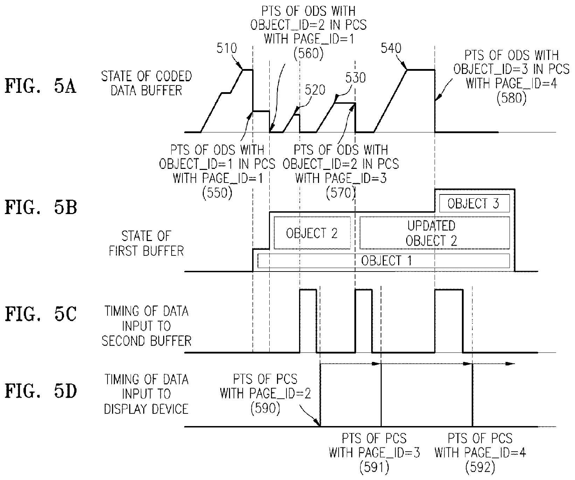

FIGS. 5A-5D are diagrams illustrating a process of inputting and outputting data to and from the buffers in accordance with a passage of time.

Referring to FIG.5A-5D, all of the PCS 305, ODS 310 and 315 and END 320 of the first display set 305 through 320 are stored in the coded data buffer 231 at a time 510 indicated by PTS information included in an MPEG-2 TS header of a pertinent packet, and are output from the coded data buffer 231, decoded in the decoder 232, and stored in the first buffer 233 between times 550 and 560 indicated by PTS information of the respective ODSs 310 and 315. As previously explained, a time when one object is output from the coded data buffer 231 theoretically is equal to a time when the object is decoded in the decoder 232 and stored in the first buffer 233. However, in actuality, since time is taken to decode the object, the value of the time 560 indicated by the PTS information of the ODS 315 with the object id=2 is greater than that of the time 550 indicated by the PTS information of the ODS310 with the object id=I.

Accordingly, a first graphic object of theODS310 with the object id=I is output from the coded data buffer 231 and is decoded and stored in the first buffer 233 at the time 550 indicated by the PTS information of the ODS 310 with the object id=I. A second graphic object of the ODS 315 with the object id=2 is output from the coded data buffer 231, and then decoded and stored in the first buffer 233 at the time 560 indicated by the PTS information of the ODS 315 with the object id=2.

All the PCS 325 and END 330 of the second display set 325 through 330 are stored in the coded data buffer 231 at a time 530 indicated by PTS information included in a header of the pertinent packet. The PCS 325 is decoded in the decoder 232 and stored in the page composition buffer 235. The image controller 236 controls the first buffer 233 to transmit the object necessary to compose the pertinent screen from the first buffer 233 to the second buffer 234 based on the page composition information. A time when the object stored in the first buffer 233 is transmitted to the second buffer 234 and the screen composition starts, is the same as a time indicated by the PTS information of the ODS, which is stored last in the first buffer 233.

However, since the PCS 305 of the first display set 305 through 320 is a dummy PCS with no page composition information, the ODS 315 with the object id=2, which is stored last, is not transmitted to the second buffer 234 at the time indicated by the PTS information thereof, and not used in the screen composition. When the image controller 236 uses the PCS information of the second display set 325 through 330 which is decoded and stored in the page composition buffer 235, the first graphic object with the object id=1 and the second graphic object with the object id=2, which are necessary for the screen composition, are transmitted from the first buffer 233 to the second buffer 234 such that the screen composition starts. At a time 590 indicated by PTS information of the PCS 325 with the page id=2, the graphic screen data of a completely composed screen is output to the display screen.

All of the PCS 335, ODS 340, and END 345 of the third display set 335 through 345 are stored in the coded data buffer 231 at a time 530 indicated by PTS information included in a header of the pertinent packet and are output from the coded data buffer 231, decoded, and immediately stored in the first buffer 233 at a time 570 indicated by the PTS information of the ODS 340 of the third display set 335 through 345. At this time, since the ODS 340 included in the third display set 335 through 345 uses a common object id as that of the ODS 315, which has already been stored in the first buffer 233, the ODS 340 overlies the previously stored second object of the ODS 315. As a result, an updated second object is obtainable.

However, since the PCS 335 with the page id=3 performs the screen composition using the ODSs 310 and 340 with the object id=1 and the object id=2, the ODS 340 with the object id=2 is stored last in the first buffer 233 at the time indicated by the PTS information of the ODS 340, and is simultaneously transmitted to the second buffer 234 to be used in the screen composition. At a time 591 indicated by the PTS information of the PCS 335 with the page id=3, a page of a completely composed screen is output to the display device. At this time, the second buffer 234 maintains a display screen output which is composed based on the page composition information of the PCS 325 with the page id=2 until the time indicated by the PTS information of the PCS 335 with the page id=3.

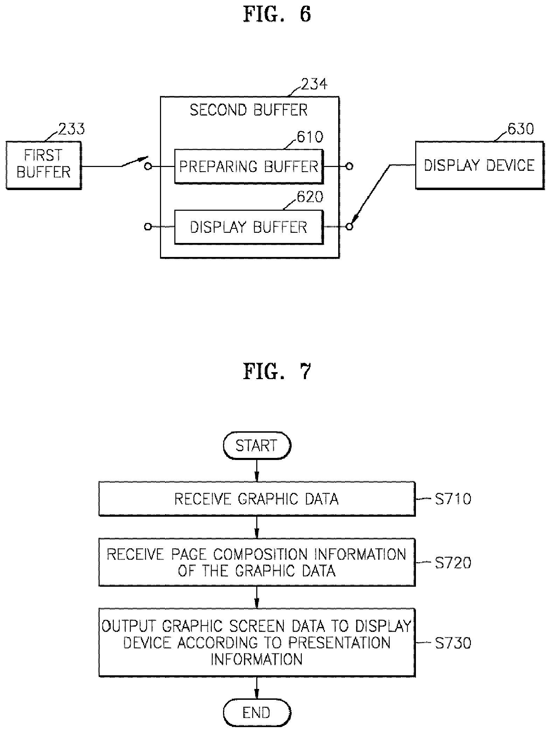

Furthermore, all of the PCS 350, ODS 355, and END 360 of the fourth display set 350 through 360 are stored in the coded data buffer 231 at a time 540 indicated by the PTS information included in a header of the pertinent packet and are output from the coded data buffer 231, decoded, and immediately stored in the first buffer 233 at a time 580 indicated by the PTS information of the ODS 355 of the fourth display set 350 through 360. At a time 592 indicated by the PTS information of the PCS 350 with the page id=4, a page of a completely composed screen is output to the display device. At this time, the second buffer 234 maintains a display screen output which is composed based on the page composition information of the PCS 335 with the page id=3 until the time indicated by the PTS information of the PCS 350 with the page id=4. Accordingly, the second buffer 234 includes a preparing bu ffer 610 and a display buffer 620 as shown in FIG. 6.

FIG. 6 is a detailed block diagram of the second buffer 234.

Referring to FIG. 6, the second buffer 234 includes the preparing buffer 610 and the display buffer 620. The preparing buffer 610 is a memory used in placing, with reference to the page composition information, objects input from the first buffer 233 at predetermined positions of the display screen. The display buffer 620 is a memory used in displaying data of the prepared display screen. At a time indicated by the PTS information of the PCS 305,325, 335 and 350, operations of the preparing buffer 610 and the display buffer 620 are exchanged and data of the completely composed screen is finally output to a display device 630.

In further detail with reference to FIGS. 4B and 4C, when the screen composition is completed with reference to the information of the PCS 325 with the page id=2, contents of the second buffer 234 of FIG. 4B are stored in the display buffer 620, and output to the display device 630. Screen composition proceeds in the preparing buffer 610 with reference to the information of the PCS 325 with the page id=3. At the time indicated by the PTS information of the PCS 335 with the page id=3, the operations of the preparing buffer 610 and the display buffer 620 are exchanged such that the contents of the second buffer 234 shown in FIG. 4 are output to the display device 630 and the data of the fourth display set 350 through 360 is input to the preparing buffer 610 in a common manner as described above so as to be used in the screen composition.

FIG. 7 is a flow chart illustrating an operation of outputting graphic display data of a completely composed page to the display device.

In operation S710, graphic data is received. In operation S720, page composition information which describes a page composition of the graphic data is received. In step operation S730, graphic screen data which is composed with reference to the page composition information of the graphic data is output to the display screen according to presentation information which indicates when the graphic screen data is output to the display screen. The presentation information is recorded in a page composition segment including the page composition information. Further, if a plurality of graphic data values exists, a graphic display screen composition starts with reference to the presentation information of a respective one of the graphic data values, among the plurality of graphic data values, that was last input.

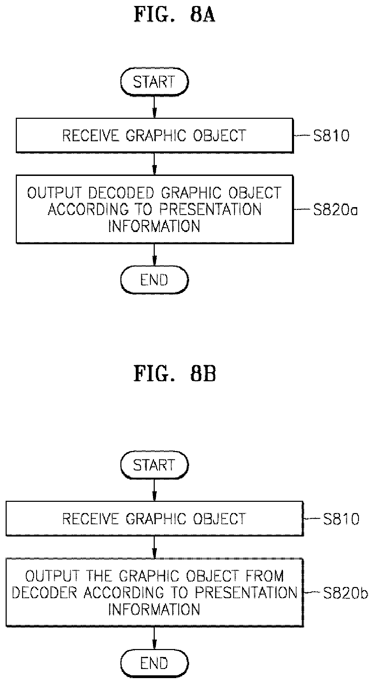

FIG. 8A is a flow chart illustrating an operation of outputting a decoded graphic object.

In operation S810, a graphic object of which a graphic data screen is composed is received. In operation S820a, a decoded graphic object is output according to presentation information indicating when the graphic object is decoded and output.

FIG. 8B is a flow chart illustrating an operation of inputting a graphic object to the decoder.

In operation S810, a graphic object of which a graphic screen is composed is received. In operation S820b, the graphic object is input to the decoder 232 to be decoded according to presentation information indicating when the graphic object is input to the decoder 232.

In theory, assuming that a decoding time in the decoder 232 is 0, FIGS. 8A and 8B show that a time when the graphic object is input to the decoder 232 is the same as a time when the graphic object is output from the decoder 232. The presentation information is recorded in an object display segment having the graphic object. Thus, according to the invention, if a plurality of graphic objects exist, time values, respectively, indicated by presentation information of the graphic objects have a pre- determined time interval therebetween.

This invention may be embodied in a general purpose digital computer by running a program from a computer usable medium, including but not limited to, storage media such as magnetic storage media (e.g., ROMs, floppy discs, hard discs, etc.), optically readable media (e.g. , CD-ROMs, DVDs, etc.), and carrier waves (e.g., transmissions over the Internet). The computer readable recording medium may be dispersively installed in a computer system connected to a network, and stored and executed as a computer readable code by a distributed computing environment.

## Claims

1. An apparatus (230) for processing graphic data, the apparatus comprising:
a decoder (232) which decodes a display set being a set of graphic data to configure a graphic screen to be displayed on a display device,
the display set comprising:
a plurality of object segments, a composition segment, and an end segment,
each of the plurality of object segments comprising graphic object data defining a graphic object to be used by the apparatus in composing the graphic screen to be displayed on the display device, an object identifier identifying the graphic object and a second presentation time stamp value, wherein the second presentation time stamp value indicates when storing of the graphic object data in a first buffer of the apparatus is to be completed,
the composition segment comprising composition information for the graphic object defined by the graphic object data of each of the plurality of object segments, reference information referring to the object identifier identifying the graphic object defined by the graphic object data of each of the plurality of object segments and a first presentation time stamp value, wherein the first presentation time stamp value indicates when graphic screen data defining graphic screen composed from the composition segment and the object segment is output to the display device, and
the end segment indicating an end of the display set;
a first buffer (233) which stores decoded graphic object data output from the decoder until the first buffer (233) is reset;
a composition buffer (235) which stores the composition information output from the decoder, the composition information specifying where the graphic object defined by the graphic object data of each of the plurality of object segments is to be displayed on the graphic screen; and
a second buffer (234) which stores composed graphic data defining the graphic screen to be output to the display device, the composed graphic data being composed based on the decoded graphic object data stored in the first buffer (233) and the composition information stored in the composition buffer (235),
wherein the graphic object data stored in the first buffer (233) is identified by the object identifier, and
when new graphic object data having the same object identifier as an object identifier of the graphic object data previously stored in the first buffer (233) is output from the decoder (232), the graphic object data stored in the first buffer (233) is updated by the new graphic object data.

## Patentansprüche

1. Vorrichtung (230) zum Verarbeiten von Graphikdaten, wobei die Vorrichtung Folgendes umfasst:
einen Decoder (232), der einen Anzeigesatz decodiert, der ein Satz von Graphikdaten ist, um einen Graphikbildschirm zu konfigurieren, der auf einer Anzeigeeinrichtung angezeigt werden soll,
wobei der Anzeigesatz Folgendes umfasst:
eine Vielzahl von Objektsegmenten, ein Zusammensetzungssegment und ein Endsegment,
wobei jedes der Vielzahl von Objektsegmenten Graphikobjektdaten, die ein Graphikobjekt definieren, das von der Vorrichtung beim Zusammensetzen des auf der Anzeigeeinrichtung anzuzeigenden Graphikbildschirms verwendet werden soll, einen Objektidentifizierer, der das Graphikobjekt identifiziert, und einen zweiten Darstellungszeitstempelwert umfasst, wobei der zweite Darstellungszeitstempelwert angibt, wann Speichern der Graphikobjektdaten in einem ersten Puffer der Vorrichtung abgeschlossen werden soll,
wobei das Zusammensetzungssegment Zusammensetzungsinformationen für das Graphikobjekt, das von den Graphikobjektdaten von jedem aus der Vielzahl von Objektsegmenten definiert wird, Referenzinformationen, die sich auf den Objektidentifizierer beziehen, der das Graphikobjekt, das von den Graphikobjektdaten von jedem aus der Vielzahl von Objektsegmenten definiert wird, identifiziert, und einen ersten Darstellungszeitstempelwert umfasst, wobei der erste Darstellungszeitstempelwert angibt, wann Graphikbildschirmdaten, die den Graphikbildschirm definieren, der aus dem Zusammensetzungssegment und dem Objektsegment zusammengesetzt ist, zur Anzeigeeinrichtung ausgegeben wird, und
wobei das Endsegment ein Ende des Anzeigesatzes angibt;
einen ersten Puffer (233), der decodierte Graphikobjektdaten speichert, die von dem Decoder ausgegeben werden, bis der erste Puffer (233) zurückgesetzt wird;
einen Zusammensetzungspuffer (235), der die Zusammensetzungsinformationen, die von dem Decoder ausgegeben werden, speichert, wobei die Zusammensetzungsinformationen spezifizieren, wo das Graphikobjekt, das von den Graphikobjektdaten von jedem aus der Vielzahl von Objektsegmenten definiert wird, auf dem Graphikbildschirm angezeigt werden soll; und
einen zweiten Puffer (234), der zusammengesetzte Graphikdaten speichert, die den Graphikbildschirm definieren, der zur Anzeigevorrichtung ausgegeben werden soll, wobei die zusammengesetzten Graphikdaten auf der Grundlage der decodierten, in dem ersten Puffer (233) gespeicherten Graphikobjektdaten und der in dem Zusammensetzungspuffer (235) gespeicherten Zusammensetzungsinformationen zusammengesetzt werden,
wobei die in dem ersten Puffer (233) gespeicherten Graphikobjektdaten durch den Objektidentifizierer identifiziert werden, und
wenn neue Graphikobjektdaten, die denselben Objektidentifizierer wie ein Objektidentifizierer der zuvor in dem ersten Puffer (233) gespeicherten Graphikobjektdaten aufweisen, von dem Decoder (232) ausgegeben werden, werden die in dem ersten Puffer (233) gespeicherten Daten durch die neuen Graphikobjektdaten aktualisiert.

## Revendications

1. Appareil (230) pour le traitement de données graphiques, lequel appareil comprend :
- un décodeur (232) qui décode un ensemble d'affichage qui est un ensemble de données graphiques pour configurer un écran graphique à afficher sur un dispositif d'affichage,
- lequel ensemble d'affichage comprend :
- plusieurs segments d'objet, un segment de composition et un segment d'extrémité,
- chacun desdits plusieurs segments d'objet comprend des données d'objet graphique définissant un objet graphique devant être utilisé par l'appareil dans la composition de l'écran graphique devant être affiché sur le dispositif d'affichage, un identifiant d'objet identifiant l'objet graphique et une seconde valeur d'horodatage de présentation, laquelle seconde valeur d'horodatage de présentation indique le moment où le stockage des données d'objet graphique dans un premier tampon de l'appareil doit être terminé,
- le segment de composition comprend des informations de composition pour l'objet graphique défini par les données d'objet graphique de chacun desdits plusieurs segments d'objet, des informations de référence renvoyant à l'identifiant d'objet identifiant l'objet graphique défini par les données d'objet graphique de chacun desdits plusieurs segments d'objet et une première valeur d'horodatage de présentation, laquelle première valeur d'horodatage de présentation indique le moment où les données d'écran graphique définissant un écran graphique composé à partir du segment de composition et du segment d'objet sont envoyées vers le dispositif d'affichage, et
- le segment d'extrémité indique une extrémité de l'ensemble d'affichage ;
- un premier tampon (233) qui stocke des données d'objet graphique décodées émises par le décodeur jusqu'à ce que le premier tampon (233) soit réinitialisé ;
- un tampon de composition (235) qui stocke les informations de composition émises depuis le décodeur, les informations de composition spécifiant l'endroit où l'objet graphique défini par les données d'objet graphique de chacun desdits plusieurs segments d'objet doit être affiché sur l'écran graphique ; et
- un second tampon (234) qui stocke des données graphiques composées définissant l'écran graphique devant être envoyé vers le dispositif d'affichage, les données graphiques composées étant composées en fonction des données d'objet graphique décodées stockées dans le premier tampon (233) et des informations de composition stockées dans le tampon de composition (235),
- dans lequel les données d'objet graphique stockées dans le premier tampon (233) sont identifiées par l'identifiant d'objet, et
- lorsque de nouvelles données d'objet graphique ayant le même identifiant d'objet qu'un identifiant d'objet des données d'objet graphique stockées précédemment dans le premier tampon (233) sont émises depuis le décodeur (232), les données d'objet graphique stockées dans le premier tampon (233) sont mises à jour par les nouvelles données d'objet graphique.
